# EUROPEAN PATENT SPECIFICATION

(11) **EP 3 403 522 B1**
(45) Date of publication and mention of the grant of the patent: **04.12.2019**
(21) Application number: 18172417.0
(22) Date of filing: 15.05.2018
(51) Int. Cl.: A44C 11/00, A44C 27/00, A44C 5/00, A44C 5/10

(54) **JEWELRY ARTICLE AND PROCESS FOR MAKING SAID JEWELRY ARTICLE**
SCHMUCKSTÜCK UND VERFAHREN ZUR HERSTELLUNG DIESES SCHMUCKSTÜCKS
ARTICLE DE BIJOUTERIE ET PROCÉDÉ DE FABRICATION DUDIT ARTICLE DE BIJOUTERIE

(30) Priority: 19.05.2017 IT 201700054760
(43) Date of publication of application: 21.11.2018
(60) Divisional application: 19204714.0
(73) Proprietor: Nuovi Gioielli S.r.l., 36065 Mussolente (VI) (IT)
(72) Inventor: CARLESSO, Damiano, I-36022 Cassola (VI) (IT); TORRESAN, Ivano, I-36065 Mussolente (VI) (IT)
(74) Representative: Gallo, Luca

(56) References cited:
- CH-A1- 700 273
- CN-A- 106 235 540
- US-A1- 2006 213 048

## Description

### Field of application

The present invention refers to a jewelry article and to a process for making said jewelry article, according to the preamble of the respective independent claims.

The present jewelry article is intended to entirely or partly constitute ornamental products, such as bracelets, necklaces and similar articles made of precious metal such as gold or platinum or alloys thereof.

The process for making the aforesaid article is therefore intended to be employed in the jewelry article manufacturing industry and in particular gold/jewelry-making industry.

### State of the art

For some time, jewelry articles have been known comprising at least one mesh made of precious or semi-precious material, formed by a weave of wires or cords of precious material interwoven with each other, in a manner analogous to that of a normal knitwear fabric.

The production of such jewelry articles with meshes made of interwoven precious-material wires involves numerous limitations regarding the structural and morphological characteristics of the final articles that can be obtained.

The main drawback of these articles of known type therefore lies in the fact that the weaving of the wires required for forming the precious-wire mesh limits the possibilities of varying the final outward appearance of the articles.

Indeed, even varying the dimensions of the wires and the shape of the weft that is woven with the precious metal wires, the outward appearance of the obtained ornamental articles is excessively limited.

A further drawback lies in the fact that the weave of the precious metal wires in the weaving of a mesh does not allow optimizing some mechanical properties, such as flexibility, if not to the detriment of other properties such as surface continuity, so that only by leaving suitable spaces between the wires is it possible to obtain the desired flexibility.

Ornamental articles made of precious metal are known that are obtained by coupling together single side-by-side elements, by mechanically coupling them together, sequentially linking them for example on a surface or connecting them through the use of third elements such as pins in the formation of watch straps.

Such articles are very complex to make and have mechanical and exterior limitations due to the coupling between the different elements that constitute the mesh.

The processes for producing the above-considered ornamental articles - whether these are interwoven wire meshes or linked or coupled elements - are rather difficult to attain and often require considerable manual intervention.

A further process for making jewelry articles is known which provides for the use of the metallurgic technique of lost-wax casting, in particular a process for micro-casting, which consists of preparing a wax model, having the same shape as the jewel to be produced. Around the wax model, a layer of thermosetting resins and ceramic granules is set, which together form a very strong mold outside the wax. Subsequently the wax is dissolved and removed from the mold, for example by means of heating in an oven. Finally, the precious metal which will constitute the jewelry article is cast inside the mold, forming the jewel, which once cooled is extracted from the mold and polished. Such process allows producing jewelry articles of any shape and size.

One drawback of jewelry articles obtained by means of such process consists of the high production cost, also due to a high consumption of tertiary materials for making the mold, which, once the making of the jewelry article is completed, become a waste product to be disposed of.

A further drawback of the jewelry articles obtained by means of such process consists of the fact that they are not elastic, rendering impossible the production of precious-material meshes provided with the desired flexibility.

In order to overcome at least some of the drawbacks of the jewelry articles of known type briefly described up to now, meshes have been for some time known in the field of jewelry articles that are made with the weaving of rings made of precious or semi-precious material.

More in detail, such ring-like meshes are made by means of the linking of each precious-material ring (e.g. gold or silver) with three other corresponding precious-material rings, each of which connected to another three corresponding rings.

In this manner, by varying the thickness and the diameter at the center of each ring, it is possible to obtain meshes with different weave and capable of causing different aesthetic impact on a user or a buyer.

However, even such meshes made by means of the linking of a plurality of precious-material rings have in practice proven that they do not lack drawbacks.

The main drawback lies in the fact that the process for the making thereof requires a step for welding each ring once inserted within the corresponding adjacent ring. Such welding requires considerable precision by the operator in order to avoid forming large, unaesthetic welding points and in order to obtain a mesh of exceptional/high-value workmanship.

In this situation, such working process is very long and costly, and moreover the final result of the mesh thus obtained depends considerably on the ability of the operator who makes the welding of each ring.

A further drawback lies in the fact that the rings which compose the mesh obtained by means of the aforesaid process superficially have the mark of the welding for the linking thereof, conferring a blemish to the entire mesh thus obtained.

A further drawback lies in the fact that the possible weave variation is very limited, in particular limited to the selection of diameter thickness of the central hole of the rings which compose the mesh, and therefore it is not possible to make really attractive and/or fashionable forms.

In recent years, the 3D printing technique was developed which allows forming complex shapes by means of the vertical superimposition of cast (normally plastic) material layers, up to forming the desired object.

In particular, it is possible to make chains of precious or semi-precious material, without having to make welds on the rings that constitute it.

As is known from the United States patent US 9,027,320, the process of known type for making a jewelry article initially provides for a step of 3D designing and drawing by means of a common design software, such as AutoCAD.

Subsequently, a step is provided for exporting the drawing obtained in the preceding design step in order to implement it in a 3D printer, which automatically forms the object by means of successive superimposition of layers of plastic material with low melting point, such as polyethylene.

Once the plastic material model of the desired jewelry article is made, a step is provided for inserting the latter within casting tank made of metal material.

Subsequently, a step is provided for filling the casting tank with gypsum-based plaster, which is a refractory material and has melting point higher than 1000°C.

Once the plaster has solidified, a firing step is provided, in which the casting tank is heated until the plastic material which constitutes the model of the jewelry article to be formed is melted, and then such plastic material is removed, freeing a mold with shape corresponding to the jewelry article to be formed.

Subsequently, a casting step is provided, in which a precious or semi-precious molten metal material is cast within the casting tank. Such molten metal penetrates within the gypsum-based plaster, into the grooves of the mold free of the previously-removed plastic material, taking the shape thereof.

Once the molten metal has solidified, the plaster is removed, obtaining the desired jewelry article.

Also, the process for making a jewelry article of known type briefly described up to now has in practice proven that it does not lack drawbacks.

A first drawback lies in the fact that the need to cast the molten metal within the mold requires that the latter does not have capillarity or narrowing. Consequently, with the method described up to now, it is not possible to make jewelry articles provided with extremely complex structure and small size. Therefore, with such method it is not possible to make a jewelry article comprising a mesh of precious material.

A further drawback lies in the fact that the process is long, difficult and produces a high quantity of waste materials for each jewelry article produced.

Document CN 106235540 describes an example of a jewelry article equipped with connecting elements connected together to form a leaf-like shaped jewel which extends on a plane of arrangement.

The example of jewelry article of the known type described in this document has in practice proven that it does not lack drawbacks.

The main drawback lies in the fact that the individual connection elements are movable with respect to one another along an axis of movement perpendicular to the plane of arrangement of the jewelry article. Such mutual movement of the connection elements leads to an unsatisfactory visual feed-back of the jewelry article, since it appears with an irregular visible surface.

### Presentation of the invention

In this situation, therefore, the main object of the present invention is that of eliminating the drawbacks of the abovementioned prior art, by providing a leaf-like jewelry article which can take on, on at least one surface thereof, very different shapes even while maintaining optimal mechanical strength characteristics, or also flexibility characteristics.

A further object of the present invention is to provide a jewelry article which is simultaneously flexible and strong.

A further object of the present invention is to provide a jewelry article which completely lacks blemishes such as welding points.

A further object of the present invention is to provide a process for making jewelry articles which allows making jewelry articles with very complex shapes.

A further object of the present invention is to provide a process for making jewelry articles which allows an attainment thereof with very high precision, and in an automated manner.

A further object of the present invention is to provide a process for making jewelry articles which is ecologically sustainable and which substantially does not produce polluting waste.

A further object of the present invention is to provide a process for making jewelry articles which is inexpensive, versatile and easy to carry out.

A further object of the present invention is to provide a jewelry article which is inexpensive, mechanically strong, light and extremely flexible.

### Brief description of the drawings

The technical characteristics of the invention, according to the aforesaid objects, can clearly be seen in the contents of the below-reported claims and the advantages thereof will be more evident in the following detailed description, made with reference to the enclosed drawings, which represent a merely exemplifying and non-limiting embodiment of the invention, in which:
- figure 1 shows a perspective view of a jewelry article, object of the present invention, in a first embodiment thereof;

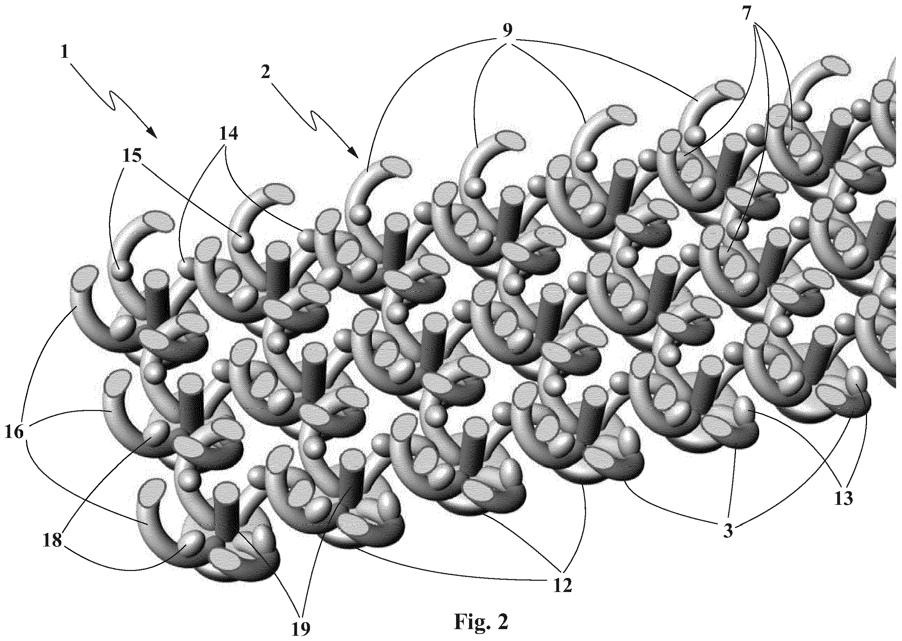

- figure 2 shows a perspective sectional view of the jewelry article made along the trace II-II of figure 1;
- figure 3 shows a perspective view of a connection element of the jewelry article of figure 1 in a first embodiment thereof, figure 3 not showing the first tooth according to the invention;
- figure 4 shows a perspective view of a connection element of the jewelry article of figure 1 in a second embodiment thereof;
- figure 5 shows a perspective view of the jewelry article, object of the present invention, in a second embodiment thereof;

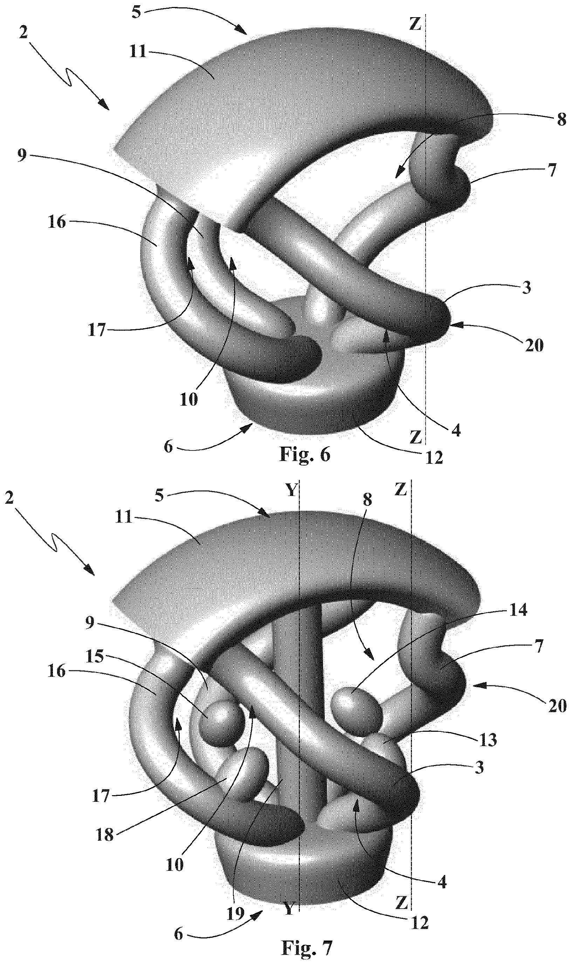

- figure 6 shows a perspective view of a connection element of the jewelry article of figure 5 in a third embodiment thereof, figure 6 not showing the first tooth according to the invention;
- figure 7 shows a perspective view of a connection element of the jewelry article of figure 5 in a fourth embodiment thereof;
- figure 8 shows a perspective view of the jewelry article, object of the present invention, in a third embodiment thereof;

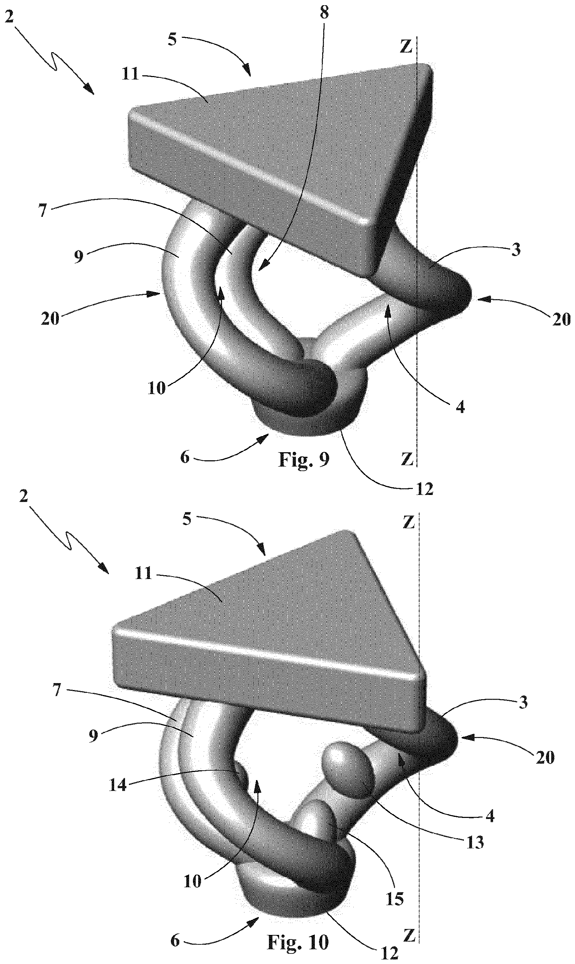

- figure 9 shows a perspective view of a connection element of the jewelry article of figure 8 in a fifth embodiment thereof, figure 9 not showing the first tooth according to the invention;
- figure 10 shows a perspective view of a connection element of the jewelry article of figure 8 in a sixth embodiment thereof;

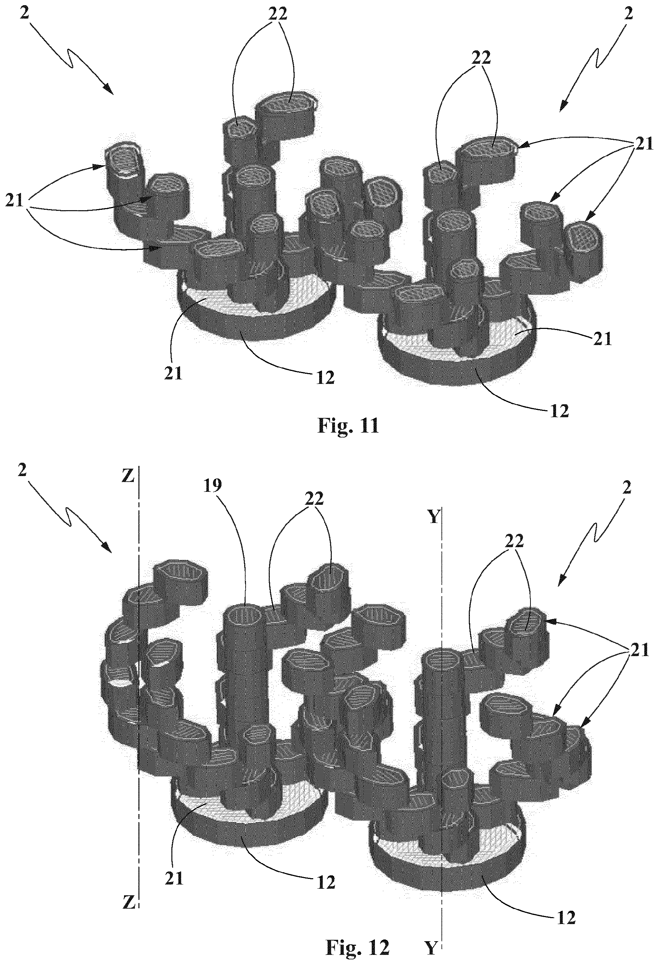

- figure 11 shows a perspective schematic view of two connection elements of the jewelry article during their formation, in particular during a welding step of the process, object of the present invention;
- figure 12 shows a perspective schematic view of two connection elements of the jewelry article during their formation, in particular during a further welding step of the process, object of the present invention;

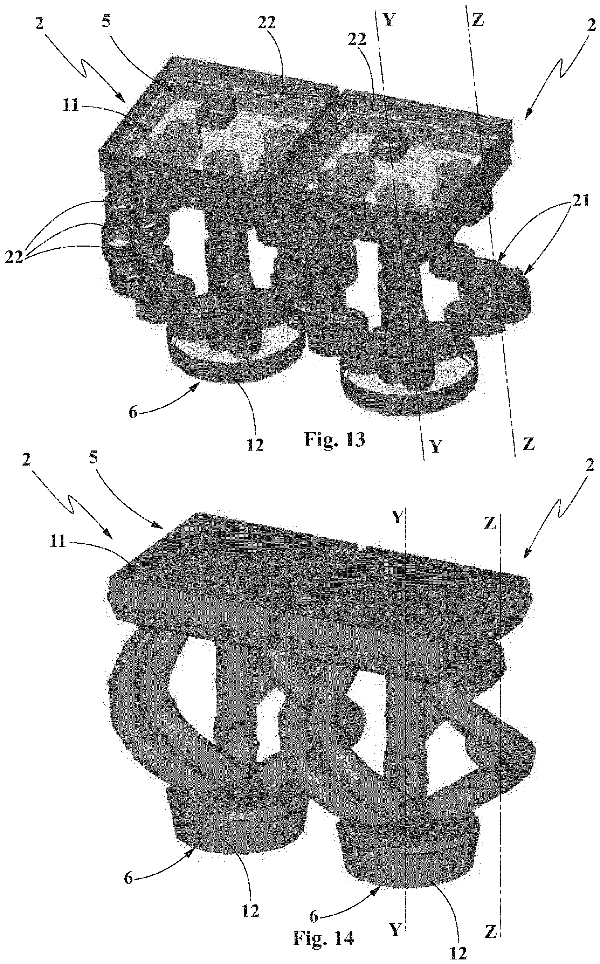

- figure 13 shows a perspective schematic view of two connection elements of the jewelry article at the end of the process for making a jewelry article, object of the present invention, with increased proportions in order to better understand such process;
- figure 14 shows a perspective schematic view of two connection elements of the jewelry article at the end of the process for making a jewelry article, object of the present invention.

### Detailed description

With reference to the enclosed figures, reference number 1 overall indicates a jewelry article according to the present invention, which is advantageously obtainable by means of the process, object of the present invention.

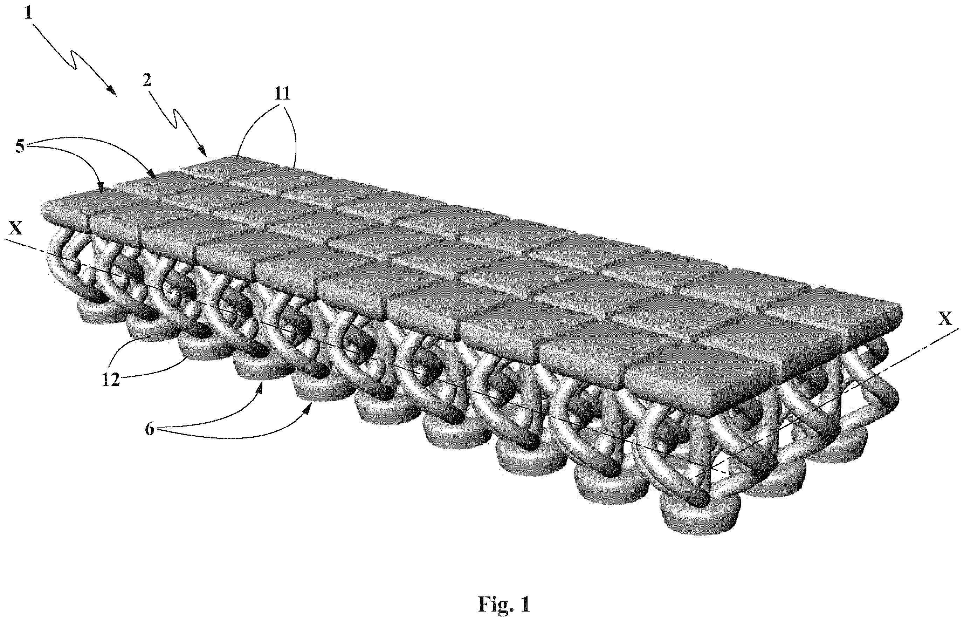

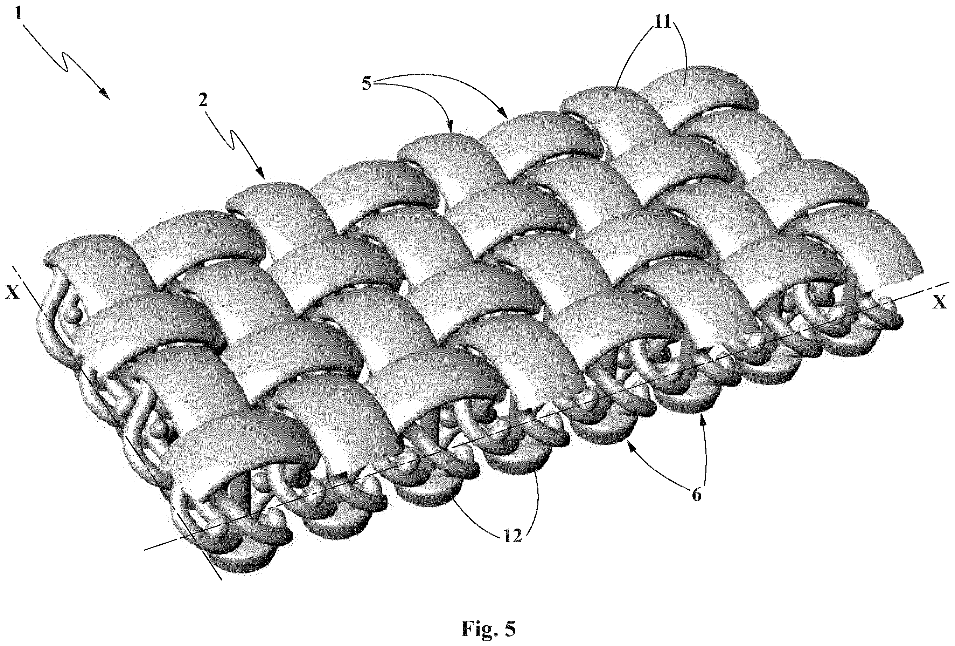

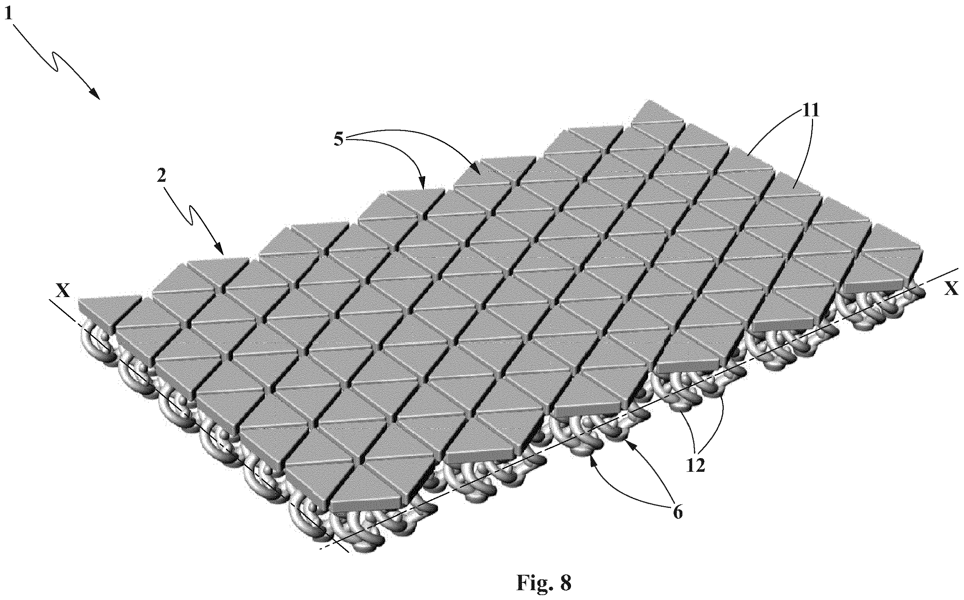

The leaf-like jewelry article, object of the present invention, comprises a plurality of connection elements 2, linked with each other along a lying plane X, in accordance with a first embodiment illustrated in figure 1, with a third embodiment illustrated in figure 5 and with a third embodiment illustrated in figure 8.

The connection elements 2 which form the jewelry article 1, object of the present invention, are made of precious metal, such as gold or platinum.

Such connection elements 2 are linked together and form a flexible mesh, wearable by a user for ornamental purposes.

According to the idea underlying the present invention, each connection element 2 comprises at least one first common base 11 defining a first visible face 5 of the jewelry article 1 and at least one first internal face.

Each connection element 2 also comprises at least one second common base 12 defining a second face 6 of the jewelry article 1 and at least three stems 3, 7, 9 which connect the first internal face of the first common base 11 to the second common base 12 generating, between pairs of the stems 3, 7, 9, at least three corresponding passage openings 4, 8, 10 linked with three stems 3, 7, 9 of three corresponding contiguous connection elements 2.

Each stem 3, 7, 9 is extended with a progression substantially helically wound around an axis Z orthogonal to the lying plane X, defining an intermediate elbow-like section 20, which projects outside the bulk of the first and the second common base 11, 12 on the lying plane X, has concavity directed towards the interior of the connection element 2 and encloses the intermediate elbow-like section 20 of a contiguous connection element 2.

In this manner, each connection element 2 is firmly constrained to at least three connection elements 2 contiguous thereto, by means of the linking of the stems 3, 7, 9 within the corresponding passage openings 4, 8, 10, making a two-dimensional solid and flexible chain.

More in detail, the stems 3, 7, 9 of each connection element 2 are engaged with corresponding stems 3, 7, 9 of contiguous connection elements 2 by means of linking. In other words, the intermediate elbow-like section 20 of the stems 3, 7, 9 of each connection element 2 encloses and constrains the intermediate elbow-like section 20 of the corresponding stem 3, 7, 9 of a contiguous connection element 2.

Advantageously, each first common base 11 of each connection element 2 has a greater size on the lying plane X of the jewelry article 1 than the size on such lying plane X of the second common base 12.

In this manner, the first common base 11 of each connection element 2, which defines the first visible face 5 of the leaf-like jewelry article 1, object of the present invention, is adjacent and side-by-side the first common base 11 of the contiguous connection elements 2, and the second common base 12 of each connection element 2 is spaced from the second common base 12 of the contiguous connection elements, allowing a greater mobility of the jewelry article 1.

More in detail, the second common base 12 of each connection element 2 defines the aforesaid second face 6, which preferably is not visible when the leaf-like jewelry article 1 is worn by the user. More clearly, the second common base 12 is substantially in contact with the skin (or with the clothes) of the user, and therefore is not visible from the outside.

Advantageously, the second common base 12 of each connection element 2 defines a second internal face facing the first internal face of the first common base.

In operation, in order to wear the leaf-like jewelry article 1, object of the present invention, the user sets the second common bases 12 of the connection elements 2 on the desired point. Such second common bases 12, being spaced from each other, allow a relative rotation of the connection elements 2, i.e. by means of a sliding of the stems 3, 7, 9, in particular a relative rotation of the intermediate elbow-like sections 20 of the stems 3, 7, 9 that enclose each other.

In this manner, the article 1 is set on the desired point, by lying on the second common bases 12. The first common bases 11 are adjacent to each other and even after the relative rotation of the connection elements 2 remain substantially side-by-side, forming an ornamental surface that is pleasing to the sight, since it appears to be continuous in the eyes of an observer.

Advantageously, the first visible face 5 defined by the first common base 11 can have any shape and any configuration, in order to provide the jewelry article 1 with the desired aesthetic character.

For example, in accordance with the first embodiment illustrated in the enclosed figure 1, each first visible face 5 of the first common base 11 of each connection element 2 is provided with substantially quadrangular form, in particular pyramidal with square base.

In accordance with the second embodiment illustrated in figure 5, each first visible face 5 of the first common base 11 is provided with a curved shape, which is transversely inserted at the ends thereof below two corresponding visible faces 6 of curved form of two adjacent connection elements 2, in order to confer a weave form to the article 1, simulating a ribbon weaving.

In accordance with the third embodiment illustrated in the enclosed figure 8, each first visible face 5 of the first common base 11 is provided with a triangular-plate shape.

According to the invention, each connection element 2 comprises a first tooth 13 fixed to at least one of the at least three stems 3, 7, 9, adapted to support a corresponding stem 3, 7, 9 of a contiguous connection element 2.

Preferably, the second common base 12 substantially has polygonal or circular plate form, and the stems 3, 7, 9 are fixed on the second internal face thereof.

Otherwise, in accordance with further embodiments not illustrated in the enclosed figures, the second common base 12 has annular form, e.g. circular (or toroidal) or polygonal.

In accordance with the embodiments illustrated in the enclosed figures, each connection element 2 comprises at least three teeth 13, 14, 15 fixed at the intermediate elbow-like section 20 of one of the corresponding at least three stems 3, 7, 9 and substantially extended towards the interior of the connection element 2 to which they are fixed. Such teeth 13, 14, 15 are adapted to support the intermediate elbow-like section of the stem 3, 7, 9 of the contiguous connection element 2 - with which the stem 3, 7, 9 (to which such teeth are fixed) is linked. In this manner, during the normal use of the leaf-like jewelry article 1, object of the present invention, the connection elements 2 remain substantially aligned along the lying plane X, since the teeth 13, 14, 15 do not allow a relative sliding of the connection elements 2 themselves along an axis transverse to the lying plane X.

In accordance with the first embodiment illustrated in the enclosed figure 1 and in accordance with the second embodiment illustrated in the enclosed figure 5, each connection element 2 of the leaf-like jewelry article 1, object of the present invention, comprises at least four stems 3, 7, 9, 16 which connect the first internal face of the first common base 11 to the second common base 12 generating, between pairs of such stems 3, 7, 9, 16, at least four corresponding passage openings 4, 8, 10, 17 linked with four stems 3, 7, 9, 16 of four corresponding contiguous connection elements 2.

In addition, in accordance with such first and second embodiment illustrated in the enclosed figures, each connection element 2 comprises four teeth 13, 14, 15, 18, each fixed to a corresponding stem of the four stems 3, 7, 9, 16, at the elbow-like section 20 of the latter.

In accordance with further embodiments not illustrated in the enclosed figures, each connection element 2 can comprise more than four stems 3, 7, 9, 16, for example it can comprise six stems connected to six other respective stems of six separate and contiguous connection elements 2. In this situation, the first common base has substantially hexagonal shape and the first visible face 5 appreciable by the user substantially has honeycomb shape.

In order to increase the mechanical strength of each connection element 2, in particular tensile strength with respect to a direction substantially transverse with respect to the lying plane X, each connection element 2 comprises at least one first support column 19 fixed on one side to the first internal face of the first common base 11 and on the other side to the second internal face of the second common base 12.

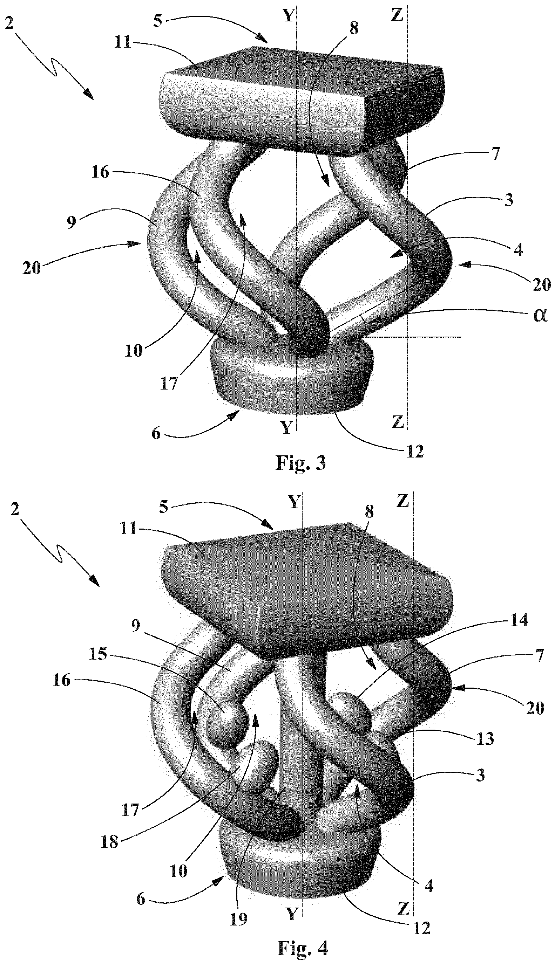

In accordance with the second embodiment of the connection elements 2 illustrated in figure 4 which constitute the leaf-like jewelry article 1 in its first embodiment, each connection element 2 comprises a first support column 19 extended along a main extension axis Y of the connection element 2 itself, parallel to the transverse axis Z and substantially transverse with respect to the lying plane X of the jewelry article 1. The first support column 19 is therefore placed substantially centrally with respect to the connection element 2 to connect the first and the second common bases 11, 12. In this situation, the stems 3, 7, 9 are arranged on a circumference around such first support column 19.

Advantageously, the stems 3, 7, 9 of each connection element 2 are all provided with the same shape with helically-wound progression and are symmetrically positioned around the main extension axis Y of the connection element 2 substantially orthogonal to the lying plane X.

Preferably, each stem 3, 7, 9 of each connection element 2 defines an angle α at the ends thereof fixed to the first common base 11 comprised between 20° and 70°, and in particular comprised between 30° and 60°.

Such angle α remains defined between each stem 3, 7, 9 and the second common base 12 of each connection element 2 and coincides with the initial angle of the shape helically-wound around the orthogonal axis Z.

Also forming the object of the present invention is a process for making a jewelry article, in particular of the type described up to now and regarding which, for the sake of simplicity, the previously-indicated reference numbers will be maintained.

The process for making a jewelry article 1, object of the present invention, initially comprises a step for preparing a three-dimensional drawing file of the desired jewelry article 1.

More in detail, the step for preparing the file drawing initially provides for a step for designing the desired jewelry article and then its transposition into a three-dimensional drawing file, e.g. by means of a first 3D CAD (Computer-Aided Drafting) software, such as AutoCAD® and the like.

Advantageously, the step for preparing the three-dimensional drawing provides for providing the jewelry article 1 with a plurality of second support columns fixed to the second common base 12.

Such second support columns are preferably provided with diameter of several microns, in order to make them easy to remove during a removal step, preferably provided for by the process, object of the present invention, and described more in detail hereinbelow.

Advantageously, the plurality of second support columns is intended to support the jewelry article 1 during the welding steps provided for by the process, also described in more detail hereinbelow.

Preferably, the three-dimensional drawing file is saved in a memory of an electronic calculator, e.g. in "3DM" format.

Advantageously, the first CAD software converts the drawing from the "3DM" format to a "STL" (STereo Lithography interface format) format, which discretizes the three-dimensional drawing into triangles and tetrahedrons, in order to facilitate the electronic calculator for the subsequent operating steps provided for by the process, object of the present invention.

The process for making a jewelry article 1 also provides for a step for defining a plurality of sections 21 of the drawing by means of the intersection of a plurality of dissection planes parallel to the lying plane X with the three-dimensional drawing of the jewelry article 1.

Advantageously, the distance between two adjacent sections 21 is comprised between 0.005 mm and 0.05 mm and in particular is comprised between 0.01 mm and 0.03 mm.

Such step for defining the sections 21 is normally attained by means of a second CAD or CAM (Computer-Aided Manufacturing) software which preferably imports the file of the three-dimensional drawing into "STL" format and intersects it with a plurality of surfaces substantially parallel to the lying plane X of the jewelry article 1.

In operation, by means of a graphical interface of the second CAD or CAM software, e.g. by means of the screen of a computer, the operator inserts parameters regarding the distance between the aforesaid parallel surfaces, based on the type of material with which the jewelry article 1 will be made and based on the type of laser used, as described in detail hereinbelow.

The process also provides for a step for arranging a welding path 22 within the borders of the sections 21 of the jewelry article 1 and a step for importing the sections 21 of the three-dimensional drawing into a 3D laser printer.

Preferably, the welding path 22 is entirely contained within the borders of the sections 21 defined during the aforesaid definition step.

The welding path 22 arranged within the borders of the sections 21 comprises a plurality of curves and segments, which describe the points at which a laser beam will pass, in a welding step described in detail hereinbelow.

The process also provides for the step for welding a powder of precious metals by means of a laser beam of the 3D laser printer along the welding path arranged during the aforesaid arrangement step.

More in detail, the 3D printer is advantageously of DMLS (Direct Metal Laser Sintering) type, in a manner *per se* known to the man skilled in the art. The 3D printer comprises a work surface made of metal material on which the precious-metal powder is cyclically set by means of a knife made of rubbery material, in successive layers with thickness preferably equal to the distance between two adjacent sections 21, and thus with thickness comprised between 0.005 mm and 0.05 mm, and in particular is comprised between 0.01 mm and 0.03 mm.

The laser of the 3D printer is preferably of the type in optical fiber and operating under pulses conditions.

The welding step is carried out at each section of the three-dimensional drawing of the jewelry article 1, starting from the section at one of the first and second common bases 11, 12 up to the other of the common bases 12, 11 of the jewelry article 1. Preferably, such welding step is carried out for each section of the three-dimensional drawing of the jewelry article 1, starting from the section at the second common base 12 up to the section at the first common base 11 of the jewelry article 1.

Advantageously, before actually making the jewelry article 1, the welding step attains the aforesaid plurality of second support columns, substantially vertical and anchored to the work surface made of metal material. Such second support columns are adapted to support the jewelry article during its attainment and in particular during all the welding steps which are repeated for each section.

During each casting step, the laser beam hits the precious-metal powder at the welding path arranged during the arrangement step and imported into the 3D printer during the step for importing the sections of the three-dimensional drawing of the jewelry article 1.

The powder made of precious metals hit by the laser beam is heated and quickly reaches the melting point, solidifying at the sections, forming the jewelry article one layer at a time. Indeed, following the melting of a powder layer along the path, the knife transports a new layer of precious-material powder and the 3D printer automatically drives the laser beam to be moved along the path arranged in the subsequent section of the jewelry article.

Once the section at the first common base 11 has been solidified, the jewelry article 1 is complete, and the connection elements 2 are linked together along the lying plane X at the end of the welding steps.

In order to make the jewelry article 1 reach the desired density, the welding step provides that the segments and the curves that constitute the welding path 22 are placed at different distances based on the metals that constitute the precious-metal powder and also provides that the speed with which the laser beam travels and the power with which the laser beam hits the welding path 22 vary based on the aforesaid desired density and based on the metals that constitute the precious-metal powder.

In general, the segments and the curves that constitute the welding path 22 are placed at an average distance between adjacent segments and/or lines comprised between 0.02 mm and 0.08 mm.

In particular, if the powder of precious metals mainly comprises gold or platinum, the average distance between adjacent segments and/or lines of the welding path 22 is comprised between 0.02 mm and 0.05 mm.

The speed with which the laser beam travels along the welding path 22 during each welding step is preferably comprised between 250 and 1300 mm/s.

In particular, if the powder of precious metals mainly comprises gold or platinum, the speed with which the laser beam travels along the welding path 22 is comprised between 300 and 600 mm/s.

The power of the laser beam during each welding step is preferably comprised between 80W and 130W.

In particular, if the powder of precious metals mainly comprises gold or platinum, the power of the laser beam is comprised between 95W and 125W.

The optimal density for the aforesaid precious metals, i.e. gold and/or platinum, is therefore achieved by means of a laser beam provided with the aforesaid travel speeds along the welding path 22 and with the aforesaid power.

In this situation, the metal cooled and hardened after the welding steps is provided with an internal porosity comprised between 0.1% and 0.3%, which is considered very low by the man skilled in the art.

Preferably, at the end of the welding step, the method provides for a step for removing the excess precious-metal powder, e.g. manually by means of a brush, so as to recover it in order to be able to use it in making a new jewelry article 1.

The process, object of the present invention, also advantageously comprises a step of removing the second support columns made during the casting step, which are easily removable since they are very thin.

In order to avoid damaging the first visible face 5 of the jewelry article 1, the second support columns are made at the second face 6 defined by the second common base 12, which is intended to lie on the skin of the user. Therefore, even if imperfections appear following the removal step, this would not negatively affect the aesthetic result of the jewelry article achieved by means of the process, object of the present invention.

Advantageously, the process also comprises a step of polishing the jewelry article 1 at the first common base 11 at its first visible face 5, in order to make the surface intended to be appreciated by users shiny and pleasing to the eye.

More in detail, the polishing step can be attained, in a manner *per se* known to the man skilled in the art, by means of the surface diamond-finishing technique, i.e. by means of a diamond disc susceptible of being driven via an electronic control unit and with the numerical control method. In particular, the electronic control unit drives an articulatable arm carrying, mounted thereon, a diamond disc at an end thereof, which is free to rotate, sliding on the first visible face 5 of the leaf-like jewelry article 1.

Otherwise, the polishing step can be attained by means of sandpapering, *per se* known the man skilled in the art, and obtained by means of the manual positioning by an operator on an abrasive strip rotated by an electric motor, in order to polish the first visible face 5 by means of abrasion.

The polishing step can also be advantageously made at the second face 6 defined by the second common base 12, in order to also make such second face 6 shiny and pleasing to view, such second face 6 being visible when the jewelry article is not worn by the user.

In order to facilitate the polishing step at the first common base 11 and second common base 12, during the welding step the laser beam is driven to lower the power and/or increase the travel speed along the welding path 22 during the formation of the first visible face 5 and of the second face 6, in order to lower the density in proximity thereto, rendering the material more malleable and therefore more easily polishable during the polishing step.

For the same purpose of facilitating the polishing step, the method otherwise provides for increasing the travel speed of the laser beam along the welding path 22 in order to decrease the energy deposited along such welding path 22 and make the casting of the metal occur at lower temperatures, and thus forming a metal with lower density with respect to the optimal density.

In this situation, the first visible face 5 and the second face 6 are provided with lower density than the density with which the first common base 11 and the second common base 12 are provided, in order to more easily and quickly polish the precious metal that constitutes the jewelry article 1.

In this manner, the jewelry article, object of the present invention, appears quite aesthetically appreciable and has considerable lightness and high mechanical elasticity.

The finding thus conceived therefore attains the pre-established objects.

In particular, the jewelry article 1, object of the present invention, is mechanically strong, light and extremely flexible.

In addition, the jewelry article 1, object of the present invention, completely lacks blemishes, such as welding points.

In addition, the process, object of the present invention, allows making jewelry articles 1 with very complex shapes.

In addition, the process for making jewelry articles, object of the present invention, allows an attainment thereof with extremely high precision and in an automated manner.

## Claims

1. Leaf-like jewelry article comprising a plurality of connection elements (2), linked with each other along a lying plane (X), and each said connection element (2) comprises:
- at least one first common base (11) defining a first visible face (5) of said jewelry article (1) and at least one first internal face;
- at least one second common base (12) defining a second face (6) of said jewelry article (1);
- at least three stems (3, 7, 9) which connect the first internal face of the first common base (11) to the second common base (12) generating, between pairs of said stems (3, 7, 9), at least three corresponding passage openings (4, 8, 10) linked with three stems (3, 7, 9) of three corresponding contiguous connection elements (2);
each said stem (3, 7, 9) being extended with a progression substantially helically wound around an axis (Z) orthogonal to said lying plane (X), defining an intermediate elbow-like section (20), which projects outside the bulk of said first and second common bases (11, 12) on said lying plane (X), has concavity directed towards the interior of said connection element (2) and encloses the intermediate elbow-like section (20) of a contiguous connection element (2);
**characterized in that** each said connection element (2) comprises a first tooth (13) fixed to at least one of said at least three stems (3, 7, 9) adapted to support a corresponding said stem (3, 7, 9) of said contiguous connection element (2).

2. Jewelry article (1) according to claim 1, **characterized in that** each said first common base (11) has a greater size on said lying plane (X) than the size on said lying plane (X) of said second common base (12).

3. Jewelry article (1) according to claims 1 or 2, **characterized in that** said second common base (12) defines a second internal face facing the first internal face of said first common base (11);
each said connection element (2) comprising at least one first support column (19) fixed on one side to the first internal face of said first common base (11) and on the other side to the second internal face of said second common base (12).

4. Jewelry article (1) according to any one of the preceding claims, **characterized in that** each said connection element (2) comprises at least four stems (3, 7, 9, 16) which connect the first internal face of the first common base (11) to the second common base (12), generating, between pairs of said stems (3, 7, 9, 16), at least four corresponding passage openings (4, 8, 10, 17) linked with four stems (3, 7, 9, 16) of four corresponding contiguous connection elements (2).

5. Jewelry article (1) according to any one of the preceding claims, **characterized in that** each said stem (3, 7, 9) defines an angle (α) at the end thereof fixed to said first common base (11) comprised between 20° and 70°.

6. Jewelry article (1) according to any one of the preceding claims, **characterized in that** said stems (3, 7, 9) are all provided with the same shape with helically-wound progression and are symmetrically positioned around a main extension axis (Y) of said connection element (2) substantially orthogonal to said lying plane (X).

7. Process for making a jewelry article (1) according to claim 1, comprising the following operating steps:
- a step for preparing a three-dimensional drawing file of said jewelry article;
- a step for defining a plurality of sections (21) of said drawing by means of the intersection of a plurality of dissection planes parallel to said lying plane (X) with said three-dimensional drawing of said jewelry article;
- a step for arranging a welding path (22) within the borders of the sections (21) of said drawing file of said jewelry article;
- a step for importing said sections (21) of said three-dimensional drawing into a 3D laser printer;
- a step for welding a powder of precious metals by means of a laser beam of said 3D laser printer along said welding path (22);
said welding step being carried out for each section (21) of said three-dimensional drawing of said jewelry article, starting from the section at one of said common bases (11, 12) up to the other of said common bases (12, 11) of said jewelry article;
said connection elements (2) being linked together along said lying plane (X) at the end of said welding steps;
**characterized in that** said step for preparing a three-dimensional drawing provides for providing the jewelry article with a plurality of second support columns fixed to said second common base (12).

8. Process for making a jewelry article (1) according to claim 7, **characterized in that** said welding step is carried out for each section (21) of said three-dimensional drawing of said jewelry article, starting from the section (21) at said second common base (12) up to the section (21) at said first common base (11) of said jewelry article.

9. Process for making a jewelry article (1) according to one of claims 7 or 8, **characterized in that** said plurality of second support columns are made at said second face (6) defined by said second common base (12).

10. Process for making a jewelry article (1) according to one of the claims from 7 to 9, **characterized in that** it also comprises a step of removing said plurality of second support columns.

11. Process for making a jewelry article (1) according to one of the claims from 7 to 9, **characterized in that** said welding step attains said plurality of second support columns, substantially vertical and anchored to a work surface made of metal material of said 3D laser printer.

## Patentansprüche

1. Blattähnliches Schmuckstück, umfassend eine Vielzahl von miteinander entlang einer Liegeebene (X) verbundenen Verbindungselementen (2), wobei jedes Verbindungselement (2) Folgendes umfasst:
- mindestens eine eine erste sichtbare Fläche (5) des genannten Schmuckstücks (1) und mindestens eine erste Innenfläche definierende gemeinsame Basis (11);
- mindestens eine zweite eine zweite Fläche (6) des genannten Schmuckstücks (1) definierende gemeinsame Basis (12);
- mindestens drei die erste Innenfläche der ersten gemeinsamen Basis (11) mit der zweiten gemeinsamen Basis (12) verbindende Schäfte (3, 7, 9), die so, zwischen Paaren der genannten Schäfte (3, 7, 9), mindestens drei mit drei Schäften (3, 7, 9) der drei entsprechenden angrenzenden Verbindungselemente (2) verbundene entsprechende Durchgangsöffnungen (4, 8, 10) erzeugen;
wobei jeder Schaft (3, 7, 9) im Wesentlichen schraubenförmig um eine Achse (Z) rechtwinklig zu der genannten Liegeebene (X) verläuft und einen ellenbogenähnlichen Zwischenabschnitt (20) definiert, der über die Maße der genannten ersten und zweiten gemeinsamen Basis (11, 12) in der genannten Liegeebene (X) hinausragt, eine zum Inneren des genannten Verbindungselements (2) gerichtete Konkavität aufweist und den ellenbogenähnlichen Zwischenabschnitt (20) eines angrenzenden Verbindungselements (2) einschließt;
**dadurch gekennzeichnet, dass** das genannte Verbindungselement (2) einen an mindestens einem der genannten drei Schäfte (3, 7, 9) befestigten ersten Zahn (13) umfasst, der geeignet ist, einen entsprechenden genannten Schaft (3, 7, 9) des genannten angrenzenden Verbindungselements (2) zu tragen.

2. Schmuckstück (1) nach Anspruch 1, **dadurch gekennzeichnet dass** die Größe der genannten ersten gemeinsamen Basis (11) in der genannten Liegeebene (X) die Größe in der genannten Liegeebene (X) der genannten zweiten gemeinsamen Basis (12) übersteigt.

3. Schmuckstück (1) nach Anspruch 1 oder 2, **dadurch gekennzeichnet, dass** die genannte zweite gemeinsame Basis (12) eine der ersten Innenfläche der genannten ersten gemeinsamen Basis (11) gegenüberliegende zweite Innenfläche definiert;
wobei jedes genannte Verbindungselement (2) mindestens eine an einer Seite an der ersten Innenfläche der genannten gemeinsamen Basis (11) und an der anderen Seite an der zweiten Innenfläche der genannten zweiten gemeinsamen Basis (12) befestigte erste Trägersäule (19) umfasst.

4. Schmuckstück (1) nach einem beliebigen der vorangegangenen Ansprüche, **dadurch gekennzeichnet, dass** jedes genannte Verbindungselement (2) mindestens vier Schäfte (3, 7, 9, 16) umfasst, die die erste Innenfläche der ersten gemeinsamen Basis (11) mit der zweiten gemeinsamen Basis (12) verbinden und so, zwischen Paaren der genannten Schäfte (3, 7, 9, 16), mindestens vier mit vier Schäften (3, 7, 9, 16) der vier entsprechenden angrenzenden Elemente (2) verbundene Durchgangsöffnungen (4, 8, 10, 17) erzeugen.

5. Schmuckstück (1) nach einem beliebigen der vorangegangenen Ansprüche, **dadurch gekennzeichnet dass** jeder genannte Schaft (3, 7, 9) einen Winkel (α) zwischen 20° und 70° an seinem Ende definiert, das an der genannten ersten gemeinsamen Basis (11) befestigt ist.

6. Schmuckstück (1) nach einem beliebigen der vorangegangenen Ansprüche, **dadurch gekennzeichnet, dass** die genannten Schäfte (3, 7, 9) alle die gleiche Form mit schraubenförmigem Verlauf aufweisen und symmetrisch um eine im Wesentlichen rechtwinklig zu der genannten Liegeebene (X) angeordnete Hauptverlaufsachse (Y) des genannten Verbindungselements (2) positioniert sind.

7. Verfahren zur Herstellung eines Schmuckstücks (1) nach Anspruch 1, das die folgenden Arbeitsschritte umfasst:
- einen Schritt zum Vorbereiten einer dreidimensionalen Zeichnungsdatei des genannten Schmuckstücks;
- einen Schritt zum Definieren einer Vielzahl von Abschnitten (21) der genannten Zeichnung mittels Überschneidung einer Vielzahl von Zergliederungsebenen parallel zu der genannten Liegeebene (X) mit der genannten dreidimensionalen Zeichnung des genannten Schmuckstücks;
- einen Schritt zur Anordnung eines Schweißpfads (22) innerhalb der Grenzen der Abschnitte (21) der genannten Zeichnungsdatei des genannten Schmuckstücks;
- einen Schritt zum Importieren der genannten Abschnitte (21) der genannten dreidimensionalen Zeichnung in einen 3D-Laserdrucker;
- einen Schritt zum Schweißen eines Edelmetallpulvers mittels eines Laserstrahls des genannten 3D-Laserdruckers entlang des genannten Schweißpfads (22);
wobei der genannte Schweißschritt (21) der genannten dreidimensionalen Zeichnung des genannten Schmuckstücks ab dem Abschnitt einer der genannten gemeinsamen Basen (11, 12) bis zu der anderen der genannten gemeinsamen Basen (12, 11) des genannten Schmuckstücks ausgeführt wird; **dadurch gekennzeichnet, dass** der genannte Schritt zum Vorbereiten einer dreidimensionalen Zeichnung dafür sorgt, das Schmuckstück mit einer Vielzahl zweiter Trägersäulen auszustatten, die an der genannten zweiten gemeinsamen Basis (12) befestigt sind.

8. Verfahren zur Herstellung eines Schmuckstücks (1) nach Anspruch 7, **dadurch gekennzeichnet, dass** der genannte Schweißschritt für jeden Abschnitt (21) der genannten dreidimensionalen Zeichnung des genannten Schmuckstücks ab dem Abschnitt (21) an der genannten zweiten gemeinsamen Basis (12) bis zu dem Abschnitt (21) an der genannten ersten gemeinsamen Basis (11) des genannten Schmuckstücks ausgeführt wird.

9. Verfahren zur Herstellung eines Schmuckstücks (1) nach Anspruch 7 oder 8, **dadurch gekennzeichnet, dass** die genannte Vielzahl zweiter Trägersäulen aus der von der genannten zweiten Basis (12) definierten zweiten Fläche (6) besteht.

10. Verfahren zur Herstellung eines Schmuckstücks (1) nach einem der Ansprüche 7 bis 9, **dadurch gekennzeichnet, dass** er außerdem einen Schritt zum Entfernen der genannten Vielzahl zweiter Trägersäulen umfasst.

11. Verfahren zur Herstellung eines Schmuckstücks (1) nach einem der Ansprüche 7 bis 9, **dadurch gekennzeichnet, dass** der genannte Schweißschritt die genannte Vielzahl zweiter Trägersäulen im Wesentlichen vertikal und an einer aus Metallwerkstoff bestehenden Arbeitsfläche des genannten 3D-Laserdruckers verankert erzielt.

## Revendications

1. Article de bijouterie de type feuille comprenant une pluralité d'éléments de connexion (2), liés les uns aux autres selon un plan de couchage (X), chaque élément de connexion (2) comprenant :
- au moins une première base commune (11) définissant une première face visible (5) dudit article de bijouterie (1) et au moins une première face interne ;
- au moins une deuxième base commune (12) définissant une deuxième face (6) dudit article de bijouterie (1) ;
- au moins trois tiges (3, 7, 9) qui connectent la première face interne de la première base commune (11) à la deuxième base commune (12) en générant, entre les paires desdites tiges (3, 7, 9), au moins trois ouvertures de passage (4, 8, 10) correspondantes liées aux trois tiges (3, 7, 9) de trois éléments de connexion (2) contigus correspondants ;
chacune des tiges (3, 7, 9) s'étendant progressivement de manière sensiblement hélicoïdale autour d'un axe (Z) orthogonal audit plan de couchage (X), pour définir une section intermédiaire (20) de type coudé, qui fait saillie en dehors de l'ensemble des premières et deuxièmes bases communes (11, 12) dudit plan de couchage (X), présente une concavité dirigée vers l'intérieur dudit élément de connexion (2) et entoure la section intermédiaire (20) de type coudé d'un élément de connexion (2) contigu ;
**caractérisé en ce que** chaque élément de connexion (2) comprend une première dent (13) fixée à l'au moins une desdites au moins trois tiges (3, 7, 9), destinée à supporter une dent correspondante d'une tige (3, 7, 9) dudit élément de connexion (2) contigu.

2. Article de bijouterie (1) selon la revendication 1, **caractérisé en ce que** chaque première base commune (11) présente une taille dans ledit plan de couchage (X) supérieure à la taille dans ledit plan de couche (X) de ladite deuxième base commune (12).

3. Article de bijouterie (1) selon la revendication 1 ou 2, **caractérisé en ce que** ladite deuxième base commune (12) définit une deuxième face interne faisant face à la première face interne de ladite première base commune (11) ;
chaque élément de connexion (2) comprenant au moins une première colonne de support (19) fixée d'un côté, à la première face interne de la première base commune (11) et de l'autre côté, à la deuxième face interne de la deuxième base commune (12).

4. Article de bijouterie (1) selon l'une quelconque des revendications précédentes, **caractérisé en ce que** chaque élément de connexion (2) comprend au moins quatre tiges (3, 7, 9, 16), qui connectent la première face interne de la première base commune (11) à la deuxième base commune (12) en générant, entre les paires desdites tiges (3, 7, 9, 16), au moins quatre ouvertures de passage correspondantes (4, 8, 10, 17) liées à quatre tiges (3, 7, 9, 16) de quatre éléments de connexion (2) contigus correspondants.

5. Article de bijouterie (1) selon l'une quelconque des revendications précédentes, **caractérisé en ce que** chaque tige (3, 7, 9) définit un angle (α) à son extrémité fixée à ladite première base commune (11), cet angle allant de 20° à 70°.

6. Article de bijouterie (1) selon l'une quelconque des revendications précédentes, **caractérisé en ce que** lesdites tiges (3, 7, 9) présentent toutes la même forme hélicoïdale et sont placées de manière symétrique autour d'un axe d'extension principal (Y) dudit élément de connexion (2) sensiblement orthogonal audit plan de couchage (X).

7. Procédé de production d'un article de bijouterie (1) selon la revendication 1, comprenant les étapes suivantes :
- une étape de préparation d'un fichier de dessin tridimensionnel dudit article de bijouterie ;
- une étape de définition de plusieurs sections (21) dudit dessin par intersection d'une pluralité de plans de découpe parallèles audit plan de couchage (X) avec ledit dessin tridimensionnel dudit article de bijouterie ;
- une étape d'agencement d'un tracé de soudage (22) sur les bordures des sections (21) dudit fichier de dessin dudit article de bijouterie ;
- une étape d'importation desdites sections (21) dudit dessin tridimensionnel vers une imprimante laser 3D ;
- une étape de soudage d'une poudre de métaux précieux au moyen d'un faisceau laser de ladite imprimante laser 3D le long dudit tracé de soudage (22) ;
ladite étape de soudage étant réalisée pour chaque section (21) du dessin tridimensionnel dudit article de bijouterie, en commençant par la section de l'une desdites bases communes (11, 12) jusqu'à l'autre desdites bases communes (12, 11) dudit article de bijouterie ;
lesdits éléments de connexion (2) étant liés les uns aux autres le long dudit plan de couchage (X) à la fin de chaque étape de soudage ;
**caractérisé en ce que** ladite étape de préparation d'un dessin tridimensionnel veille à munir l'article de bijouterie d'une pluralité de deuxièmes colonnes de support fixées à ladite deuxième base commune (12).

8. Procédé de production d'un article de bijouterie (1) selon la revendication 7, **caractérisé en ce que** ladite étape de soudage est réalisée pour chaque section (21) dudit dessin tridimensionnel dudit article de bijouterie, en commençant par la section (21) de ladite deuxième base commune (12) jusqu'à la section (21) de ladite première base commune (11) dudit article de bijouterie.

9. Procédé de production d'un article de bijouterie (1) selon l'une des revendications 7 et 8, **caractérisé en ce que** la pluralité de deuxièmes colonnes de support est préparée sur ladite deuxième face (6) définie par ladite deuxième base commune (12).

10. Procédé de production d'un article de bijouterie (1) selon l'une des revendications 7 à 9, **caractérisé en ce qu'**il comprend également une étape d'élimination de ladite pluralité de deuxièmes colonnes de support.

11. Procédé de production d'un article de bijouterie (1) selon l'une des revendications 7 à 9, **caractérisé en ce que** ladite étape de soudage atteint ladite pluralité de deuxièmes colonnes de support, sensiblement verticales et ancrées à une surface de travail composée du matériau métallique de ladite imprimante laser 3D.
